# EUROPÄISCHE PATENTSCHRIFT

(11) **EP 1 005 422 B1**
(45) Veröffentlichungstag und Bekanntmachung des Hinweises auf die Patenterteilung: **01.08.2001**
(21) Anmeldenummer: 98943642.3
(22) Anmeldetag: 01.07.1998
(51) Int. Cl.: B60N 2/28, B60N 2/44, B60N 2/48

(54) **KINDERSIIZ FÜR KRAFTFAHRZEUGE**
CHILD SEAT FOR MOTOR VEHICLES
SIEGE D'ENFANT POUR VEHICULES A MOTEUR

(30) Priorität: 21.08.1997 DE 29714903 U
(43) Veröffentlichungstag der Anmeldung: 07.06.2000
(73) Patentinhaber: Concord Kinderautositze- und Kindermöbel sowie Geräteherstellungsgesellschaft mbH, D-95346 Stadtsteinach (DE)
(72) Erfinder: REITHMEIER, Harald, D-95346 Stadtsteinach (DE); KÖNIG, Walter, D-72525 Münsingen (DE)
(74) Vertreter: LOUIS, PÖHLAU, LOHRENTZ & SEGETH
(86) Internationale Anmeldenummer: DE9801875
(87) Internationale Veröffentlichungsnummer: WO9910197

(56) Entgegenhaltungen:
- DE-A- 2 429 457
- DE-A- 3 820 658
- DE-U- 29 510 642
- DE-U- 29 721 468
- GB-A- 2 296 655
- US-A- 4 130 318
- US-A- 4 402 548

## Beschreibung

Die Erfindung betrifft einen Kindersitz für Kraftfahrzeuge, der ein Sitzteil, eine Rückenlehne und eine Kopfstütze aufweist, die zwei Seitenwangen und ein die beiden Seitenwangen verbindendes Mittelteil aufweist und die an der Rückenlehne höhenverstellbar vorgesehen ist, wobei die Rückenlehne außenseitig eine Führungseinrichtung aufweist, entlang welcher die Kopfstütze höhenvestellbar geführt ist.

Aus der DE 295 10 642 U1 ist ein Kindersitz bekannt, bei welchem die Rückenlehne mit einer Ausnehmung ausgebildet ist, die zum Einstecken eines laschenartigen Verbindungsteiles vorgesehen ist. Das laschenartige Verbindungsteil steht vom Mittelteil der Kopfstütze nach unten weg. Durch die Aussparung in der Rückenlehne ergibt sich eine mechanische Schwächung derselben, was einen Mangel darstellt. Das Sitzteil, die Rückenlehne und die Kopfstütze sind bei einem solchen Kindersitz üblicherweise mit einem dekorativen Bezug bedeckt. Das vom Mittelteil der Kopfstütze nach unten wegstehende Verbindungsteil ist vom besagten Bezug üblicherweise nicht bedeckt, so daß es sich beim Hochstellen der Kopfstütze aus der Rückenlehne heraus störend bemerkbar macht. Außerdem wird die Festigkeit der mechanischen Verbindung zwischen der Rückenlehne und der Kopfstütze reduziert, wenn die Kopfstütze aus der Rückenlehne herausbewegt wird, weil die Einstecktiefe des laschenartigen, von der Kopfstütze nach unten wegstehenden Verbindungsteiles in bezug auf die Rückenlehne bei dem Herausverstellen der Kopfstütze aus der Rückenlehne entsprechend reduziert wird.

Ein ähnlicher Kindersitz, wie er oben beschrieben worden ist, ist bspw. auch aus der EP 0 326 265 A2 bekannt. Bei diesem bekannten Kindersitz ist die Kopfstütze bspw. mittels zweier spazierstockförmig gebogener Verbindungselemente - ähnlich wie die Kopfstütze eines Fahrzeugsitzes - mit der Rückenlehne höhenverstellbar verbunden.

Aus der DE 42 04 232 C2 ist ein Kindersitz für Kraftfahrzeuge bekannt, der eine Rückenlehne mit einer höhenverstellbaren Kopfstütze aufweist (sh. Fig. 17). Auch bei diesem bekannten Kindersitz ergibt sich der Mangel, daß bei einer entsprechend hochgestellten Kopfstütze zwischen dieser und der Rückenlehne eine bezugsfreie Zone verbleibt, was als störend angesehen wird. Außerdem wird auch hier die mechanische Festigkeit der Verbindung zwischen der Kopfstütze und der Rückenlehne bei entsprechend hochgestellter Kopfstütze reduziert, was einen weiteren Mangel darstellt.

Ein Kindersitz der eingangs genannten Art ist aus der GB 2 296 655 A bekannt. Die Rückenlehne dieses bekannten Kindersitzes ist in zwei Abschnitte, nämlich in einen oberen Abschnitt und in einen unteren Abschnitt unterteilt.

Der untere Abschnitt ist an seinen beiden voneinander abgewandten Seitenrändern jeweils mit einer Führungsrinne ausgebildet. Der obere Rückenlehnenabschnitt ist oberseitig mit der Kopfstütze ausgebildet, von der zwei Seitenwangen nach vorne wegstehen. Vom oberen Rückenlehnenabschnitt stehen voneinander beabstandete seitliche Rückenlehnenwangen nach unten. Die Rückenlehnenwangen stehen in die Führungsrinnen hinein, so daß der obere Rückenlehnenabschnitt mit der damit einstückig verbundenen Kopfstütze in bezug zum unteren Rückenlehnenabschnitt in der Höhe verstellbar ist. Die Rückenlehnenwangen sind bei diesem bekannten Kindersitz nur oberseitig - und nicht entlang des Führungsabschnittes - miteinander verbunden, was sich auf die Führungseigenschaften und auf die Festigkeit bzw. Stabilität entsprechend auswirkt.

Der Erfindung liegt die Aufgabe zugrunde, einen Kindersitz der eingangs genannten Art zu schaffen, bei welchem der Bezug den Kindersitz unabhängig von der jeweiligen Kopfstützen-Höheneinstellung bedeckt, bei welchem die mechanische Festigkeit von der jeweiligen Kopfstützen-Höheneinstellung unabhängig ist, und bei welchem die Kopfstütze mit einfachen Mitteln wunschgemäß in der Höhe einstellbar ist.

Diese Aufgabe wird bei einem Kindersitz der eingangs genannten Art erfindungsgemäß dadurch gelöst, daß die Kopfstütze mit ihrem Mittelteil die Rückseite der Rückenlehne überspannt, und daß die Kopfstütze zwei voneinander beabstandete Klammerorgane aufweist, die an die Führungseinrichtung der Rückenlehne angepaßt im Übergangsbereich zwischen dem Mittelteil und der jeweiligen Seitenwange an der Vorderseite der Kopfstütze vorgesehen sind.

Bei dem erfindungsgemäßen Kindersitz überragt die Kopfstütze die Rückenlehne in Höhenrichtung nicht, so daß die mechanische Festigkeit durch die Rückenlehne selbst bestimmt ist. Nachdem die Kopfstütze die Rückenlehne mit ihrem Mittelteil rückseitig überspannt, ist es in vorteilhafter Weise möglich, den Kindersitz mit einem dekorativen Bezug zu versehen, welcher die Rückenlehne vorderseitig bedeckt. Auch die Kopfstütze kann mit einem Bezug versehen sein, der die beiden Seitenwangen der Kopfstütze und die Rückenlehne vorderseitig überspannt. Unabhängig von der jeweiligen Höheneinstellung der Kopfstütze relativ zur Rückenlehne wird bei dem erfindungsgemäßen Kindersitz eine bezugsfreie Zone - wie sie bei den bekannten Kindersitzen der oben genannten Art nicht vermeidbar ist - vermieden.

Die Führungseinrichtung der Rückenlehne kann einfach von den beiden voneinander abgewandten Seitenrändern der Rückenlehne gebildet sein, es ist jedoch auch möglich, daß die Rückenlehne an ihrer Vorderseite entlang ihrer beiden Seitenränder mit je einer Führungsrinne ausgebildet ist, welche die Führungseinrichtung bildend zueinander parallel verlaufen und in welche die Klammerorgane der Kopfstütze formschlüssig eingreifen. Dabei sind die Klammerorgane an die Führungseinrichtung der Rückenlehne derartig formmäßig angepaßt, daß die Kopfstütze kraftsparend und spielfrei an der Rückenlehne höhenverstellbar ist. Die Führungsrinnen können an der Rückenlehne direkt und unmittelbar ausgebildet sein, selbstverständlich ist es auch möglich, die Führungsrinnen von der Rückenlehne unabhängig herzustellen und an dieser zu befestigen.

Die Kopfstütze kann mittels einer an ihr vorgesehenen, ein federndes Rastorgan aufweisenden Arretiereinrichtung an der Rückenlehne festlegbar sein. Dabei kann die Arretiereinrichtung zur stufenlosen oder zur stufenweise Höheneinstellung der Kopfstütze relativ zur Rückenlehne vorgesehen sein. Im zuletzt genannten Falle der stufenweise Höhenverstellbarkeit der Kopfstütze relativ zur Rückenlehne kann die Rückenlehne an ihrer Rückseite in Höhenrichtung voneinander beabstandete Rastausnehmungen aufweisen, die an das federnde Rastorgan formmäßig angepaßt sind. Die Rastausnehmungen und das federnde Rastorgan können hierbei derartig ratschenartig gestaltet sein bzw. zusammenwirken, daß es wohl möglich ist, die Kopfstütze ohne Betätigung der Arretiereinrichtung hochzustellen, daß es jedoch ohne Betätigung der Arretiereinrichtung nicht möglich ist, die Kopfstütze an der Rückenlehne nach unten zu verstellen.

Als zweckmäßig hat es sich erwiesen, wenn die Arretiereinrichtung ein zweiarmiges Hebelgebilde aufweist, das um eine mittlere Schwenkachse zwischen einer Arretierstellung und einer Freigabestellung verschwenkbar ist, wobei am Endabschnitt des einen Hebelarms des Hebelgebildes das Rastorgan und am Endabschnitt des zweiten Hebelarms ein Betätigungsgriff vorgesehen ist, der durch ein Loch im Mittelteil der Kopfstütze von rückwärts zugänglich und betätigbar ist, die Schwenkachse von einer mit dem Hebelgebilde integral verbundenen Querrippe gebildet ist, die in einer an der Vorderseite des Mittelteils der Kopfstütze ausgebildeten, vom Loch für den Betätigungsgriff beabstandeten Querrinne gelagert ist, und zwischen dem Hebelgebilde und dem Mittelteil der Kopfstütze ein Federelement vorgesehen ist.

Die die Schwenkachse der Arretiereinrichtung bildende Querrippe kann hierbei eine an die Querabmessung des Betätigungsgriffes angepaßte Querabmessung aufweisen und mit dem Betätigungsgriff durch seitliche Verbindungsstege verbunden sein, so daß durch den Betätigungsgriff, die Querrippe und die beiden seitlichen Verbindungsstege ein Rahmen festgelegt ist, der einen durch die Querrinne und zwei seitliche, in das Loch im Mittelteil der Kopfstütze mündende Stegrillen festgelegten Ansatz im Mittelteil der Kopfstütze umgreift. Durch eine solche Ausbildung mit dem besagten Ansatz im Mittelteil der Kopfstütze und die Ausbildung der Arretiereinrichtung mit einem den besagten Ansatz umgreifenden Rahmen ist es einfach möglich, die Arretiereinrichtung am Mittelteil der Kopfstütze genau zu positionieren. Das ist unter Montage- bzw. Zusammenbau-Gesichtspunkten zweckmäßig. Des weiteren ist es zweckmäßig, wenn das Mittelteil der Kopfstütze mit einer von der Querrinne für die Querrippe beabstandeten Queraussparung und einer die Querrinne mit der Queraussparung verbindenden Längsaussparung ausgebildet ist, wobei in der Freigabestellung des Betätigungsgriffes die Längsausparung zur Aufnahme eines entsprechenden Abschnittes des ersten Hebelarms des Hebelgebildes und die Queraussparung zur Aufnahme des von einem Querstab gebildeten Rastorganes vorgesehen ist. Auf diese Weise ist eine kompakte Gestaltung des Mittelteils der Kopfstütze möglich, wobei das Rastorgan zwischen der Kopfstütze und der Rückenlehne problemlos und genau positioniert unterbringbar ist.

Der erste Hebelarm des zweiarmigen Hebelgebildes der Arretiereinrichtung des erfindungsgemäßen Kindersitzes ist zwischen der Schwenkachse-Querrippe und dem das Rastorgan bildenden Querstab vorzugsweise mit einem Sackloch ausgebildet, das zum Festlegen des einen Endabschnittes des Federelementes vorgesehen ist. Bei diesem Federelement handelt es sich zweckmäßigerweise um eine Schraubendruckfeder. Die Schraubendruckfeder wird mit ihrem einen Endabschnitt im zuletzt erwähnten Sackloch festgelegt. Danach kann dann die Arretiereinrichtung am Mittelteil genau passend positioniert werden. Anschließend kann die Kopfstütze an der Rückenlehne angebracht werden.

Die Längsaussparung kann im Mittelteil der Kopfstütze mit einem zweiten Sackloch ausgebildet sein, das zum Festlegen des zweiten Endabschnittes des Federelementes vorgesehen ist. Auf diese Weise ergibt sich also eine genau definierte Festlegung des Federelementes insgesamt zwischen der Arretiereinrichtung und dem Mittelteil der Kopfstütze des erfindungsgemäßen Kindersitzes.

Um im zusammengebauten Zustand des Kindersitzes, d.h. bei an der Rückenlehne angebrachter Kopfstütze, die Arretiereinrichtung von ihrer normalen Ruhe- bzw. Arretierstellung in die Freigabestellung verstellen zu können, was durch ein Verschwenken der Arretiereinrichtung um ihre Schwenkachse geschieht, ist es bevorzugt, wenn das zweiarmige Hebelgebilde an der die Schwenkachse bildenden Querrippe gegenüberliegenden Seite mit einem Gleitrücken ausgebildet ist. Dieser Gleitrücken bildet ein Widerlager, um das der Betätigungsgriff von der Arretier- in die Freigabestellung verschwenkbar ist. Dabei wird gleichzeitig das Federelement zwischen dem Mittelteil der Kopfstütze und der Arretiereinrichtung mechanisch gespannt. Wird der Betätigungsgriff wieder freigelassen, so kann sich das Federelement entspannen, wobei die Arretiereinrichtung automatisch wieder von der Freigabestellung in die Arretierstellung verstellt wird.

Um ein seitliches Verkippen der Kopfstütze in Bezug auf die Rückenlehne zu verhindern, kann das Mittelteil der Kopfstütze an seiner Vorderseite mit mindestens einer Führungsrippe versehen sein, die in eine an der Rückseite der Rückenlehne ausgebildete Längsrinne hineinsteht, gegen welche das Rastorgan der Arretiereinrichtung in der normalen Arretierstellung mittels des Federelementes gezwängt ist. Bevorzugt ist es, wenn das Mittelteil der Kopfstütze an seiner Vorderseite zwei voneinander beabstandete Führungsrippen aufweist, wobei die Arretiereinrichtung zwischen den beiden Führungsrippen vorgesehen ist.

Eine schrittweise Verstellung der Kopfstütze in Bezug auf die Rückenlehne ist möglich, wenn die Längsrinne mit voneinander beabstandeten Querrinnen ausgebildet ist, in welche das Rastorgan der Arretiereinrichtung in der normalen Arretierstellung mittels des Federelementes hineinzwängbar ist. Wie bereits weiter oben erwähnt worden ist, können die erwähnten Querrinnen und das federnd vorgesehene Rastorgan der Arretiereinrichtung derartig ratschenartig gestaltet sein, daß es wohl möglich ist, die Kopfstütze ohne Betätigung der Arretiereinrichtung hochzuverstellen, daß es jedoch ohne Betätigung der Arretiereinrichtung von der Arretier- in die Freigabestellung nicht möglich ist, die Kopfstütze an der Rückenlehne nach unten zu verstellen.

Um die Kopfstütze an einer ungewollten Entfernung von der Rückenlehne beim Hochverstellen zu verhindern, kann die an der Rückseite der Rückenlehne vorgesehene Längsrinne oberseitig mittels eines Verschlußelementes verschlossen sein. Bei diesem Verschlußelement kann es sich bspw. um einen Verschlußstopfen handeln, der am oberseitigen Ende der Längsrinne festgeschraubt sein kann.

Zweckmäßig kann es bei dem erfindungsgemäßen Kindersitz sein, wenn die Seitenwangen mit hakenförmigen Aussparungen für einen Fahrzeug-Diagonalgurt ausgebildet sind.

Weitere Einzelheiten ergeben sich aus der nachfolgenden Beschreibung eines in der Zeichnung dargestellten Ausführungsbeispieles des erfindungsgemäßen Kindersitzes für Kraftfahrzeuge. Es zeigen:
- Fig. 1: perspektivisch eine Seitenansicht des Kindersitzes von schräg oben,
- Fig. 2: eine Vorderansicht des Kindersitzes gemäß Fig. 1,
- Fig. 3: eine der Fig. 2 ähnliche Vorderansicht des Kindersitzes, wobei die Kopfstütze mit durchgezogenen dicken Linien in der auch in Fig.2 gezeichneten abgesenkten Stellung und mit dünneren Linien in einer hochgestellten Position gezeichnet ist,
- Fig. 4: längsgeschnitten einen Abschnitt der Rückenlehne und einen Abschnitt des Mittelteils der Kopfstütze gemeinsam mit der dazwischen angeordneten Arretiereinrichtung,
- Fig. 5: in einer der Fig. 4 ähnlichen Darstellung den Abschnitt des Mittelteils der Kopfstütze allein,
- Fig. 6: eine Ansicht des Abschnittes des Mittelteils der Kopfstütze in Blickrichtung der Pfeile VI-VI in Fig.5,
- Fig. 7: in einer den Figuren 4 und 5 ähnlichen Schnittdarstellung einen Abschnitt des Mittelteils der Kopfstütze in Kombination mit der Arretiereinrichtung,
- Fig. 8: eine Ansicht des Abschnittes des Mittelteiles der Kopfstütze in Kombination mit der Arretiereinrichtung in Blickrichtung der Pfeile VIII-VIII in Fig. 7, und
- Fig. 9: einen Abschnitt der Rückenlehne in Blickrichtung auf ihre Längsrinne und die voneinander beabstandeten Querrinnen.

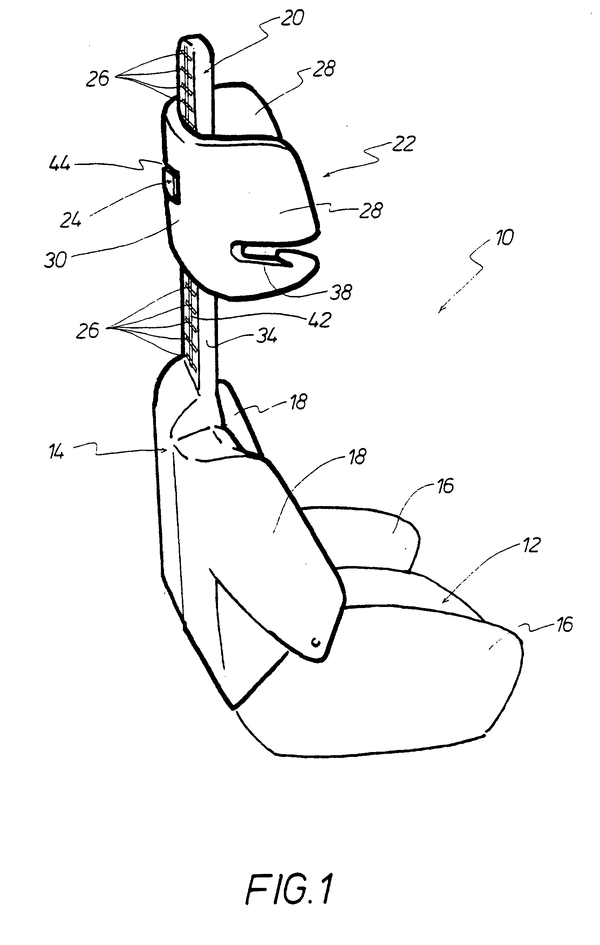

Fig. 1 zeigt eine Ausbildung des Kindersitzes 10 für Fahrzeuge, der ein Sitzteil 12 und eine vom Sitzteil 12 nach oben wegstehende Rückenlehne 14 aufweist. Das Sitzteil 12 und die Rückenlehne 14 können einteilig oder zweiteilig gestaltet und miteinander geeignet verbunden sein. Das Sitzteil 12 weist Wangen 16 und die Rückenlehne 14 weist Wangen 18 auf. Über die Wangen 18 hochstehend ist die Rückenlehne 14 mit einem einen entsprechenden Abschnitt der Rückenlehne 14 bildenden Führungsteil 20 ausgebildet, entlang welchem eine Kopfstütze 22 spielfrei in der Höhe verstellbar ist. Die Kopfstütze 22 ist mit einer Arretiereinrichtung 24 versehen, mittels welcher die Kopfstütze 22 in der jeweils gewünschten Höhenposition arretierbar ist.

Die Fig. 1 zeigt eine Ausbildung des Kindersitzes 10, bei welchem die Kopfstütze 22 in der Höhe stufenweise verstellbar ist. Zu diesem Zwecke ist das Führungsteil 20 der Rückenlehne 14 rückseitig mit voneinander beabstandeten Rastausnehmungen 26 ausgebildet, in welche ein (nicht gezeichnetes) federndes Rastorgan der Arretiereinrichtung 22 einrastbar ist. Die Arretiereinrichtung 24 kann selbstverständlich auch derartig gestaltet sein, daß die Kopfstütze 22 in Bezug auf die Rückenlehne 14 bzw. in Bezug auf das Führungsteil 20 der Rückenlehne 14 stufenlos höhenverstellbar ist.

Die Kopfstütze 22 weist zwei Seitenwangen 28 und ein die beiden Seitenwangen 28 miteinander verbindendes Mittelteil 30 auf. Die Kopfstütze 22 überspannt mit ihrem Mittelteil 30 die Rückseite der Rückenlehne 14 bzw. des Führungsteiles 20 der Rückenlehne 14, an welcher auch die oben erwähnten Rastausnehmungen 26 vorgesehen sind.

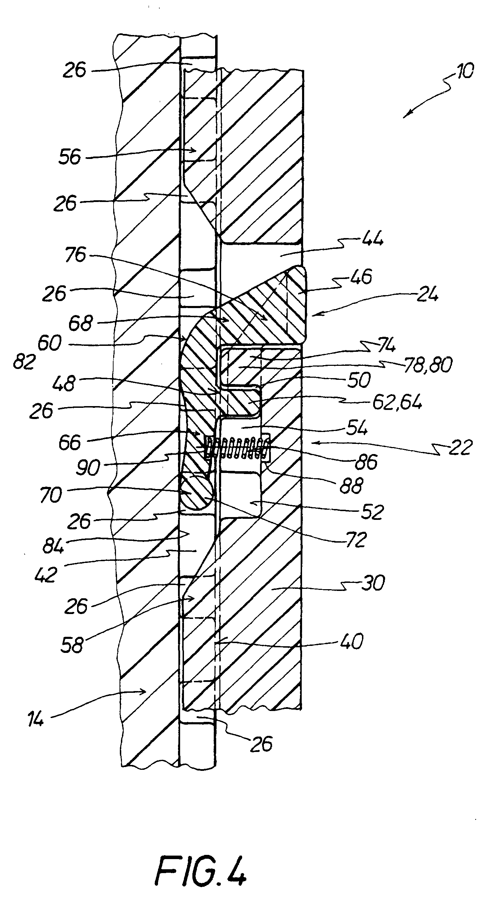

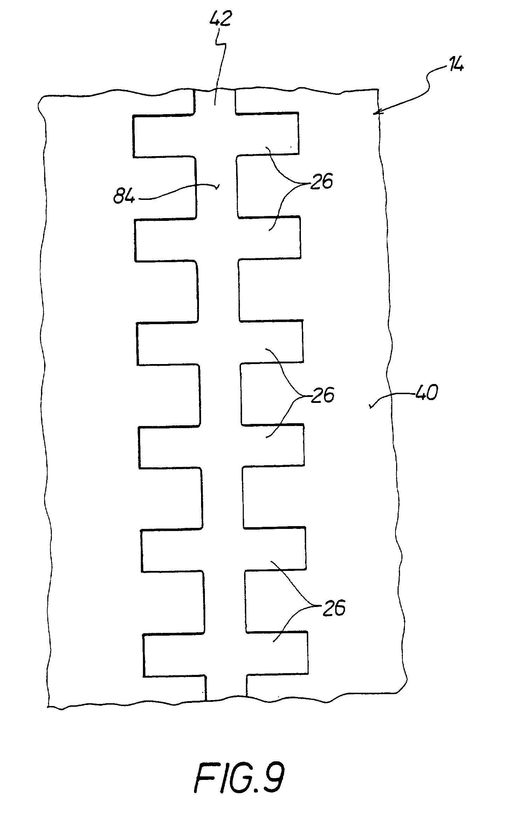

Die Arretiereinrichtung 24 ist am Mittelteil 30 der Kopfstütze 22 vorgesehen, sie wird weiter unten in Verbindung mit den Figuren 4 bis 9 detaillierter beschrieben.

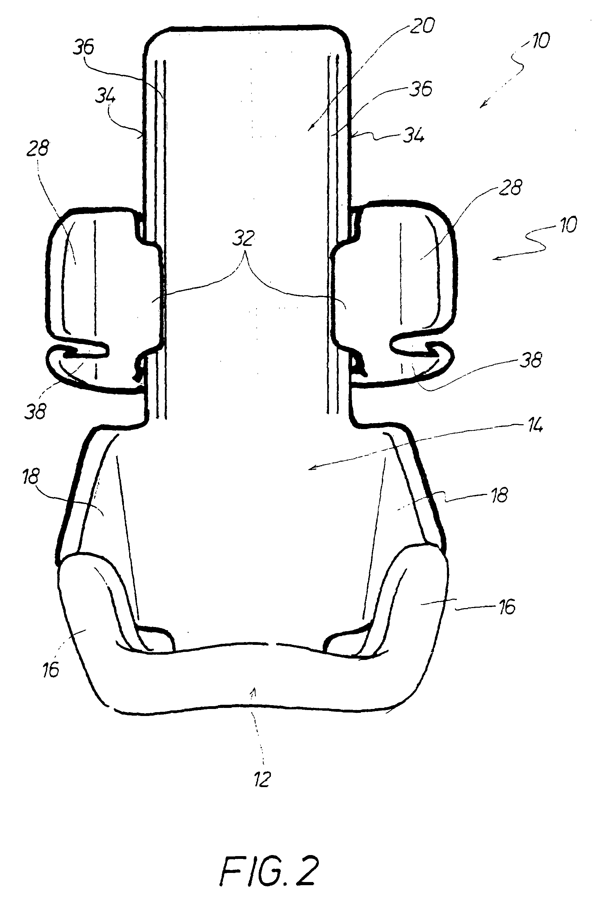

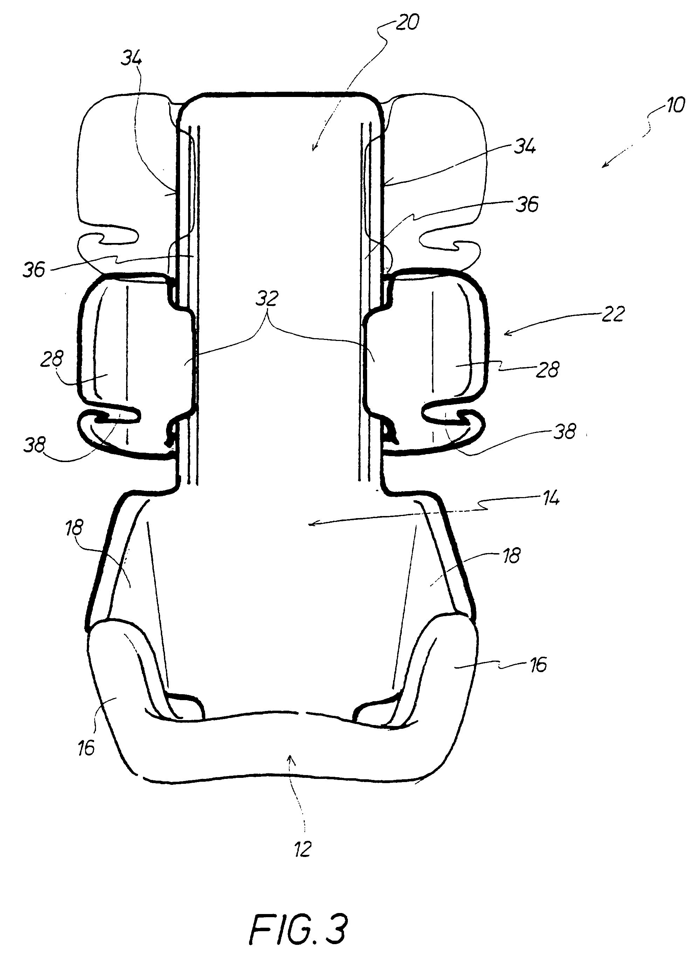

Zur spielfreien Höhenverstellung der Kopfstütze 22 entlang des Führungsteiles 20 der Rückenlehne 14 ist die Kopfstütze 22 mit zwei voneinander beabstandeten, seitlichen Klammerorganen 32 ausgebildet, die im Übergangsbereich zwischen dem Mittelteil 30 und der jeweiligen Seitenwange 28 der Kopfstütze an deren Vorderseite vorgesehen sind, wie aus den Figuren 2 und 3 ersichtlich ist. Zur spielfreien linearen Führung der Kopfstütze 22 in bezug auf das Führungsteil 20 der Rückenlehne 14 ist das Führungsteil 20 der Rückenlehne 14 an seiner Vorderseite in der Nachbarschaft seiner beiden Seitenränder 34 jeweils mit einer Führungsrinne 36 ausgebildet. Die beiden Führungsrinnen 36 bilden folglich für die Kopfstütze 22 eine Führungseinrichtung. Die Führungsrinnen 36 verlaufen zueinander parallel - wie aus den Figuren 2 und 3 ersichtlich ist -, und die Klammerorgane 32 der Kopfstütze 22 greifen in die Führungsrinnen 36 formschlüssig, d.h. spielfrei, ein, so daß die Kopfstütze 22 spielfrei in Bezug zum Führungsteil 20 der Rückenlehne 14 in der Höhe verstellbar ist. Das ist in Fig. 3 angedeutet.

Die Seitenwangen 28 der Kopfstütze 22 sind mit hakenförmigen Aussparungen 38 ausgebildet, die zur Aufnahme eines Diagonalgurtes eines fahrzeugeigenen Dreipunkt-Sicherheitsgurtes dienen.

Das Sitzteil 12 und die Rückenlehne 14 sind üblicherweise mit einem dekorativen Bezug versehen, der auch das Führungsteil 20 der Rückenlehne 14 vorderseitig seitlich bis zu den Führungsrinnen 36 bedeckt. Ein weiterer dekorativer Bezug überspannt die Kopfstütze 22 zwischen den beiden Seitenwangen 28 auf der Vorderseite des Führungsteils 20. Auf diese Weise wird unabhängig von der jeweiligen Höheneinstellung der Kopfstütze 22 eine bezugsfreie Zone am Kindersitz 10 vermieden. Das stellt unter dekorativen Gesichtspunkten einen wesentlichen Vorteil dar. Ein ganz erheblicher Vorteil des Kindersitzes 10 besteht auch darin, daß seine Formstabilität von der jeweiligen Höheneinstellung der Kopfstütze 22 absolut unabhängig ist.

Fig. 4 zeigt längsgeschnitten abschnittweise die Rückenlehne 14, das Mittelteil 30 der Kopfstütze 22 und die zwischen der Rückenlehne 14 und der Kopfstütze 22 vorgesehene Arretiereinrichtung 24. Die Rückenlehne 14 ist an ihrer dem Mittelteil 30 der Kopfstütze 22 zugewandten Rückseite 40 mit einer Längsrinne 42 (sh. auch Fig. 1) und mit die Längsrinne 42 kreuzenden Rastausnehmungen bzw. Querrinnen 26 ausgebildet.

Das Mittelteil 30 der Kopfstütze 22 weist ein Loch 44 auf (sh. auch Fig. 1), aus welchem die Arretiereinrichtung 24 mit einem Betätigungsgriff 46 vorsteht und betätigbar ist. Das Mittelteil 30 der Kopfstütze 22 ist an seiner der Rückenlehne 14 zugewandten Vorderseite 48 vom Loch 44 beabstandet mit einer Querrinne 50 und von der Querrinne 50 beabstandet außerdem mit einer Queraussparung 52 ausgebildet.

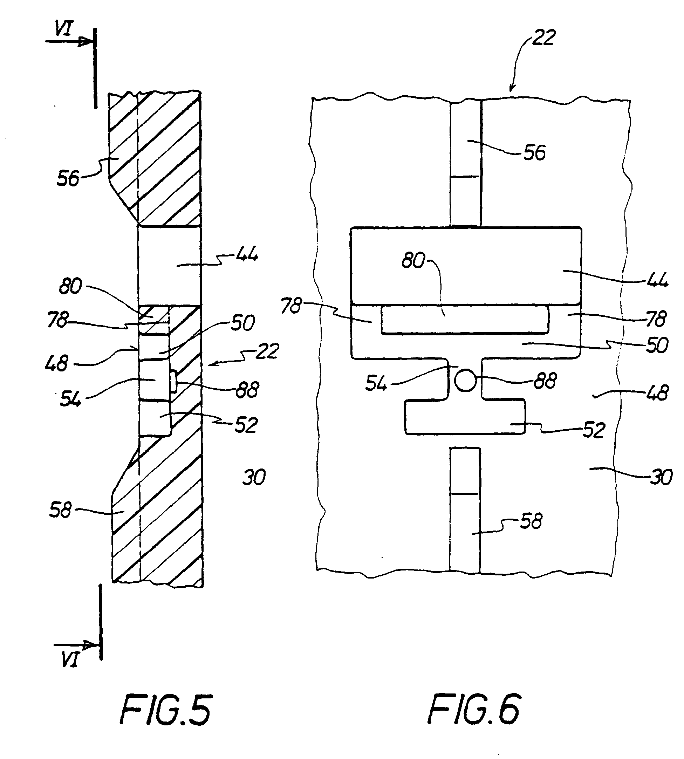

Wie auch aus den Figuren 5 und 6 ersichtlich ist, sind die Queraussparung 52 und die Querrinne 50 durch eine Längsaussparung 54 miteinander verbunden.

Von der Vorderseite 48 des Mittelteiles 30 der Kopfstütze 22 steht oberhalb des Loches 44 eine Führungsrippe 56 und unterhalb der Queraussparung 52 eine zweite Führungsrippe 58 weg. Die Führungsrippen 56 und 58 stehen in die Längsrinne 42 an der Rückseite 40 der Rückenlehne 14 hinein und dienen zur seitlichen Führung der Kopfstütze 22 in bezug auf die Rückenlehne 14.

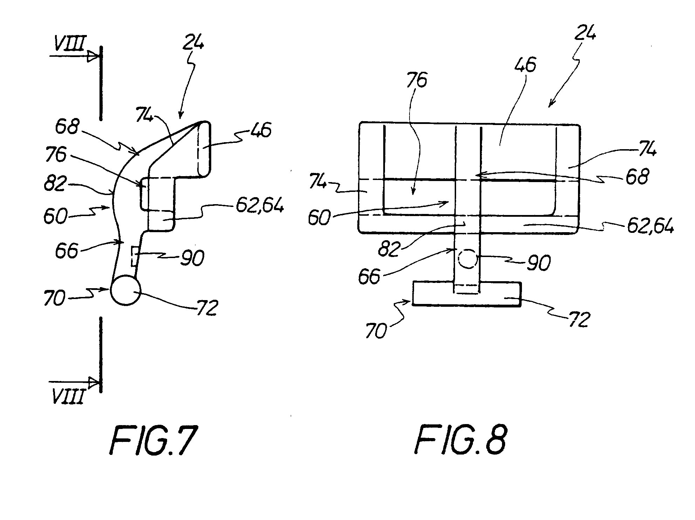

Wie auch die Figuren 7 und 8 verdeutlichen, weist die Arretiereinrichtung 24 ein zweiarmiges Hebelgebilde 60 mit einer von einer Querrippe 62 gebildeten Schwenkachse 64 auf. Die Querrippe 62 ist in der Querrinne 50 gelagert. Das Hebelgebilde 60 weist einen ersten Hebelarm 66 und einen zweiten Hebelarm 68 auf, zwischen welchen die erwähnte Schwenkachse 64 vorgesehen ist. An dem von der Schwenkachse 64 entfernten Endabschnitt des ersten Hebelarmes 66 ist ein Rastorgan 70 vorgesehen, das von einem Querstab 72 gebildet ist. An dem von der Schwenkachse 64 entfernten Endabschnitt des zweiten Hebelarms 68 ist der Betätigungsgriff 46 vorgesehen. Der Betätigungsgriff 46 und die Querrippe 62 der Arretiereinrichtung 24 sind durch seitliche Verbindungsstege 74 (sh. insbes. Fig. 8) miteinander integral verbunden. Durch den Betätigungsgriff 46, die Querrippe 62 und die beiden seitlichen Verbindungsstege 74 wird somit ein Rahmen 76 festgelegt, der einen durch die Querrinne 50 und zwei seitliche, in das Loch 44 im Mittelteil 30 der Kopfstütze 22 mündende Stegrillen 78 festgelegten Ansatz 80 im Mittelteil 30 der Kopfstüzte 22 umgreift. An diesem Ansatz 80 kann die Arretiereinrichtung 24 somit beim Zusammenbau von Kopfstütze 22 und Rückenlehne 14 einfach und genau definiert angebracht werden.

Der Querrippe 62 gegenüberliegend ist das zweiarmige Hebelgebilde 60 mit einem gekrümmten Gleitrücken 82 ausgebildet, der im zusammengebauten Zustand am Grund 84 der Längsrinne 42 (sh. Fig. 4) anliegt, und der gemeinsam mit der Querrippe 62 die Schwenkachse 64 der Arretiereinrichtung 24 bildet.

Zwischen dem Mittelteil 30 der Kopfstütze 22 und dem ersten Hebelarm 66 des zweiarmigen Hebelgebildes 60 ist ein Federelement 86 vorgesehen, das von einer Schraubendruckfeder gebildet ist. Zur genau definierten Positionierung des Federelementes 86 ist das Mittelteil 30 der Kopfstütze 22 im Bereich der Längsaussparung 54 mit einem ersten Sackloch 88 und der erste Hebelarm 66 des zweiarmigen Hebelgebildes 60 der Arretiereinrichtung 24 an seiner dem Mittelteil 30 der Kopfstütze 22 zugewandten Seite mit einem zweiten Sackloch 90 ausgebildet. Das zweite Sackloch 90 ist derartig dimensioniert, daß in ihm der entsprechende Endabschnitt des Federelementes 86 bei der Montage festgehalten wird.

Gleiche Einzelheiten sind in den Figuren 1 bis 9 jeweils mit denselben Bezugsziffern bezeichnet, so daß es sich erübrigt, in Verbindung mit allen diesen Figuren alle Einzelheiten jeweils detailliert zu beschreiben.

## Patentansprüche

1. Kindersitz für Kraftfahrzeuge, der ein Sitzteil (12), eine Rückenlehne (14) und eine Kopfstütze (22) aufweist, die zwei Seitenwangen (28) und ein die beiden Seitenwangen (28) verbindendes Mittelteil (30) aufweist und die an der Rückenlehne (14) höhenverstellbar vorgesehen ist; wobei die Rückenlehne (14) außenseitig eine Führungseinrichtung aufweist, entlang welcher die Kopfstütze (22) höhenverstellbar geführt ist,
**dadurch gekennzeichnet,**
daß die Kopfstütze (22) mit ihrem Mittelteil (30) die Rückseite der Rückenlehne (14) überspannt, und daß die Kopfstütze (22) zwei voneinander beabstandete Klammerorgane (32) aufweist, die an die Führungseinrichtung der Rückenlehne (14) angepaßt im Übergangsbereich zwischen dem Mittelteil (30) und der jeweiligen Seitenwange (28) an der Vorderseite der Kopfstütze (22) vorgesehen sind.

2. Kindersitz nach Anspruch 1,
**dadurch gekennzeichnet,**
daß die Rückenlehne (14) an ihrer Vorderseite entlang ihrer beiden Seitenränder (34) mit je einer Führungsrinne (36) ausgebildet ist, welche die Führungseinrichtung bildend zueinander parallel verlaufen und in welche die Klammerorgane (32) der Kopfstütze (22) formschlüssig eingreifen.

3. Kindersitz nach Anspruch 1 oder 2,
**dadurch gekennzeichnet,**
daß die Kopfstütze (22) mittels einer an ihr vorgesehenen, ein federndes Rastorgan (70) aufweisenden Arretiereinrichtung (24) an der Rückenlehne (14) festlegbar ist.

4. Kindersitz nach Anspruch 3,
**dadurch gekennzeichnet,**
daß die Arretiereinrichtung (24) zur stufenlosen Höheneinstellung der Kopfstützen (22) relativ zur Rückenlehne (14) vorgesehen ist.

5. Kindersitz nach Anspruch 3,
**dadurch gekennzeichnet,**
daß die Arretiereinrichtung (24) zur stufenweise Höheneinstellung der Kopfstütze (22) relativ zur Rückenlehne (14) vorgesehen ist.

6. Kindersitz nach Anspruch 5,
**dadurch gekennzeichnet,**
daß die Rückenlehne (14) an ihrer Rückseite (40) in Höhenrichtung voneinander beabstandete Rastausnehmungen bzw. Querrinnen (26) aufweist, die an das federnde Rastorgan (70) formmäßig angepaßt sind.

7. Kindersitz nach einem der Ansprüche 3 bis 6,
**dadurch gekennzeichnet,**
daß die Arretiereinrichtung (24) ein zweiarmiges Hebelgebilde (60) aufweist, das um eine mittlere Schwenkachse (64) zwischen einer Arretierstellung und einer Freigabestellung verschwenkbar ist, wobei am Endabschnitt des einen Hebelarms (66) des Hebelgebildes (60) das Rastorgan (70) und am Endabschnitt des zweiten Hebelarms (68) ein Betätigungsgriff (46) vorgesehen ist, der durch ein Loch (44) im Mittelteil (30) der Kopfstütze (22) von rückwärts zugänglich und betätigbar ist, daß die Schwenkachse (64) von einer mit dem Hebelgebilde (60) integral verbundenen Querrippe (62) gebildet ist, die in einer an der Vorderseite (48) des Mittelteils (30) der Kopfstütze (22) ausgebildeten, vom Loch (44) für den Betätigungsgriff (46) beabstandeten Querrinne (50) gelagert ist, und daß zwischen dem Hebelgebilde (60) und dem Mittelteil (30) der Kopfstütze (22) ein Federelement (86) vorgesehen ist.

8. Kindersitz nach Anspruch 7,
**dadurch gekennzeichnet,**
daß die Querrippe (62) eine an die Querabmessung des Betätigungsgriffes (46) angepaßte Querabmessung aufweist und mit dem Betätigungsgriff (46) durch seitliche Verbindungsstege (74) verbunden ist, so daß durch den Betätigungsgriff (46), die Querrippe (62) und die beiden seitlichen Verbindungsstege (74) ein Rahmen (76) festgelegt ist, der einen durch die Querrinne (50) und zwei seitliche, in das Loch (44) im Mittelteil (30) der Kopfstütze (22) mündende Stegrillen (78) festgelegten Ansatz (80) im Mittelteil (30) der Kopfstütze (22) umgreift.

9. Kindersitz nach Anspruch 7 oder 8,
**dadurch gekennzeichnet,**
daß das Mittelteil (30) der Kopfstütze (22) mit einer von der Querrinne (50) für die Querrippe (62) beabstandeten Queraussparung (52) und mit einer die Querrinne (50) mit der Queraussparung (52) verbindenden Längsaussparung (54) ausgebildet ist, wobei in der Freigabestellung des Betätigungsgriffes (46) die Längsaussparung (54) zur Aufnahme eines entsprechenden Abschnittes des ersten Hebelarems (66) des Hebelgebildes (60) und die Queraussparung (52) zur Aufnahme des von einem Querstab (72) gebildeten Rastorganes (70) vorgesehen ist.

10. Kindersitz nach Anspruch 9,
**dadurch gekennzeichnet,**
daß der erste Hebelarm (66) zwischen der Querrippe (62) und dem das Rastorgan (70) bildenden Querstab (72) mit einem Sackloch (90) ausgebildet ist, das zum Festlegen des einen Endabschnittes des Federelementes (86) vorgesehen ist.

11. Kindersitz nach Anspruch 9 und 10,
**dadurch gekennzeichnet,**
daß die Längsaussparung (54) mit einem zweiten Sackloch (88) ausgebildet ist, das zum Festlegen des zweiten Endabschnittes des Federelementes (86) vorgesehen ist.

12. Kindersitz nach einem der Ansprüche 7 bis 11,
**dadurch gekennzeichnet,**
daß das zweiarmige Hebelgebilde (60) an der der Querrippe (62) gegenüberliegenden Seite mit einem Schwenkachse-Gleitrücken (82) ausgebildet ist.

13. Kindersitz nach einem der Ansprüche 7 bis 12,
**dadurch gekennzeichnet,**
daß das Mittelteil (30) der Kopfstütze (22) an seiner Vorderseite (48) mit mindestens einer Führungsrippe (56, 58) versehen ist, die in eine an der Rückseite (40) der Rückenlehne (14) ausgebildeten Längsrinne (42) hineinsteht, gegen welche das Rastorgan (70) der Arretiereinrichtung (24) in der normalen Arretierstellung mittels des Federelementes (86) gezwängt ist.

14. Kindersitz nach Anspruch 13,
**dadurch gekennzeichnet**,
daß die Längsrinne (42) mit voneinander beabstandeten Querrinnen (26) ausgebildet ist, in welche das Rastorgan (70) in der normalen Arretierstellung mittels des Federelementes (86) hineingezwängt ist.

15. Kindersitz nach Anspruch 13 oder 14,
**dadurch gekennzeichnet,**
daß die Längsrinne (42) oberseitig mittels eines entfernbaren Verschlußelementes verschlossen ist.

16. Kindersitz nach einem der vorhergehenden Ansprüche,
**dadurch gekennzeichnet,**
daß die Seitenwangen (28) der Kopfstütze (22) mit hakenförmigen Aussparungen (38) für einen Fahrzeug-Diagonalgurt ausgebildet sind.

## Claims

1. Child seat for motor vehicles, which has a seat part (12), a backrest (14) and a head restraint (22), which has two side cheeks (28) and a central part (30) connecting the two side cheeks (28) and which is provided in a vertically adjustable manner on the backrest (14), the backrest (14) having, on its exterior, a guide device along which the head restraint (22) is guided in a vertically adjustable manner, characterized in that the head restraint (22) spans the rear side of the backrest (14) by means of its central part (30), and in that the head restraint (22) has two clip elements (32) which are spaced apart from each other and, matched to the guide device of the backrest (14), are provided on the front side of the head restraint (22) in the transition region between the central part (30) and the respective side cheek (28).

2. Child seat according to Claim 1, characterized in that the backrest (14), along its two side edges (34) on its front side, is designed with a respective guide channel (36), which channels run parallel to each other forming the guide device and in which the clip elements (32) of the head restraint (22) engage in a positive-locking manner.

3. Child seat according to Claim 1 or 2, characterized in that the head restraint (22) can be fastened to the backrest (14) by means of a locking device (24) which is provided on it and has a resilient latching element (70).

4. Child seat according to Claim 3, characterized in that the locking device (24) is provided for the infinitely variable vertical adjustment of the head restraint (22) relative to the backrest (14).

5. Child seat according to Claim 3, characterized in that the locking device (24) is provided for the stepwise vertical adjustment of the head restraint (22) relative to the backrest (14).

6. Child seat according to Claim 5, characterized in that the backrest (14) has, on its rear side (40), latching recesses or transverse channels (26) which are spaced apart from one another in the vertical direction and are matched in terms of shape to the resilient latching element (70).

7. Child seat according to one of Claims 3 to 6, characterized in that the locking device (24) has a two-armed lever construction (60) which can be pivoted about a central pivot spindle (64) between a locking position and a release position, the latching element (70) being provided on the end section of one lever arm (66) of the lever construction (60) and an actuating handle (46) being provided on the end section of the second lever arm (68) and being accessible and actuable from the rear through a hole (44) in the central part (30) of the head restraint (22), in that the pivot spindle (64) is formed by a transverse rib (62) which is connected integrally to the lever construction (60) and is mounted in a transverse channel (50), which is formed on the front side (48) of the central part (30) of the head restraint (22) and is spaced apart from the hole (44) for the actuating handle (46), and in that a spring element (86) is provided between the lever construction (60) and the central part (30) of the head restraint (22).

8. Child seat according to Claim 7, characterized in that the transverse rib (62) has a transverse size which is matched to the transverse size of the actuating handle (46), and is connected to the actuating handle (46) by lateral connecting webs (74), with the result that the actuating handle (46), the transverse rib (62) and the two lateral connecting webs (74) define a frame (76) which fits around a projection (80) in the central part (30) of the head restraint (22), which projection is defined by the transverse channel (50) and two lateral web grooves (78) which open into the hole (44) in the central part (30) of the head restraint (22).

9. Child seat according to Claim 7 or 8, characterized in that the central part (30) of the head restraint (22) is formed with a transverse cutout (52), which is spaced apart from the transverse channel (50) and is intended for the transverse rib (62), and with a longitudinal cutout (54) which connects the transverse channel (50) to the transverse cutout (52), the longitudinal cutout (54) being provided in order to accommodate a corresponding section of the first lever arm (66) of the lever construction (60) in the release position of the actuating handle (46), and the transverse cutout (52) being provided in order to accommodate the latching element (70) formed by a transverse bar (72).

10. Child seat according to Claim 9, characterized in that between the transverse rib (62) and the transverse bar (72) forming the latching element (70), the first lever arm (66) is formed with a blind hole (90) which is provided for the fastening of one end section of the spring element (86).

11. Child seat according to Claim 9 and 10, characterized in that the longitudinal cutout (54) is formed with a second blind hole (88) which is provided for the fastening of the second end section of the spring element (86).

12. Child seat according to one of Claims 7 to 11, characterized in that on the side lying opposite the transverse rib (62) the two-armed lever construction (60) is formed with a pivot-spindle sliding back (82).

13. Child seat according to one of Claims 7 to 12, characterized in that the central part (30) of the head restraint (22) is provided on its front side (48) with at least one guide rib (56, 58) which projects into a longitudinal channel (42) which is formed on the rear side (40) of the backrest (14) and against which the latching element (70) of the locking device (24) is forced by means of the spring element (86) in the normal locking position.

14. Child seat according to Claim 13, characterized in that the longitudinal channel (42) is formed with transverse channels (26) which are spaced apart from one another and into which the latching element (70) is forced by means of the spring element (86) in the normal locking position.

15. Child seat according to Claim 13 or 14, characterized in that the longitudinal channel (42) is closed on the upper side by means of a removable closure element.

16. Child seat according to one of the preceding claims, characterized in that the side cheeks (28) of the head restraint (22) are formed with hook-shaped cutouts (38) for a diagonal belt of a vehicle.

## Revendications

1. Siège pour enfant pour véhicule, du type se composant d'une assise (12), d'un dossier (14) et d'un appuie-tête (22), ainsi que de deux joues latérales (28) et d'une portion centrale (30) réunissant les deux joues latérales (28) et prévue réglable en hauteur sur le dossier (14), le dossier (14) présentant sur sa face externe un système de guidage le long duquel l'appuie-tête (22) est guidé de façon réglable en hauteur, **caractérisé en ce que** l'appuie-tête (22) s'étend par sa portion centrale (30) sur le côté externe du dossier (14) et l'appuie-tête (22) comporte deux organes d'accrochage (32) écartés l'un de l'autre, qui s'adaptent au système de guidage porté par le dossier (14) dans la région de passage située entre la portion centrale et chacune des joues latérales (28) du côté frontal de l'appuie-tête (22).

2. Siège pour enfant selon la revendication 1, caractérisé en ce que le dossier (14) comporte sur sa face frontale, le long de chacun de ses deux bords latéraux (34), une cannelure ou rainure de guidage (36) qui s'étendent parallèlement l'une à l'autre, en formant le système de guidage et dans lesquelles s'accrochent en s'y verrouillant les organes d'accrochage (32) de l'appuie-tête (22).

3. Siège pour enfant selon l'une des revendications 1 ou 2, caractérisé en ce que l'appuie-tête (22) peut être immobilisé sur le dossier (14) au moyen d'un dispositif d'arrêt (24) prévu sur lui et présentant un organe de repos élastique (70).

4. Siège pour enfant selon la revendication 3, caractérisé en ce que le dispositif d'arrêt (24) est prévu en vue du réglage en hauteur ininterrompu de l'appuie-tête (22) par rapport au dossier (14).

5. Siège pour enfant selon la revendication 3, caractérisé en ce que le dispositif d'arrêt (24) est prévu en vue du réglage en hauteur par degrés de l'appuie-tête (22) par rapport au dossier (14).

6. Siège pour enfant selon la revendication 5, caractérisé en ce que le dossier (14) présente sur sa face arrière (40) les évidements d'arrêt ou rainures d'arrêt (36) écartés l'un de l'autre en direction verticale et dont la forme est adaptée à l'organe d'arrêt élastique (70).

7. Siège pour enfant selon l'une des revendications 3 à 6, caractérisé en ce que le dispositif d'arrêt comporte une structure de leviers à deux bras (60) qui est montée de façon basculable autour d'un axe de basculement (64) entre une position d'arrêt et une position de libération, un bouton d'actionnement (46) étant prévu sur une section terminale de l'un des bras de levier (66) de la structure de levier (60) de l'organe d'arrêt (70) et sur une section terminale du second bras de levier (68), ce bouton étant accessible et pouvant être actionné vers l'arrière à travers un trou (44) de la portion centrale (30) de l'appuie-tête (22),
en ce que l'axe de basculement (64) est constitué par une nervure transversale (62) réalisée en une seule pièce avec la structure de levier (60), ladite nervure étant placée dans une rainure transversale (50) pratiquée dans la face frontale (48) de la portion centrale (30) de l'appuie-tête (22) et écartée du trou d'accès (44) au bouton d'actionnement (46),
et en ce que, entre la structure de levier (60) et la portion centrale (30) de l'appuie-tête (22) est prévu un élément élastique (86).

8. Siège pour enfant selon la revendication 7, caractérisé en ce que la nervure transversale (62) présente une dimension transversale adaptée à la dimension transversale du bouton d'actionnement (46) et est réunie au bouton d'actionnement (46) par des tiges de liaison latérales (74), de manière telle que, par l'intermédiaire du bouton d'actionnement (46), la nervure transversale (62) et les deux tiges de liaison transversales (74) constituent un cadre (76) qui entoure la portion centrale (30) de l'appuie-tête (22) et qui est défini par la nervure transversale (50) et deux traverses latérales (78) s'ouvrant dans le trou (44) de la portion centrale (30) de l'appuie-tête (22).

9. Siège pour enfant selon l'une des revendications 7 ou 8, caractérisé en ce que la portion centrale (30) de l'appuie-tête (22) comporte un évidement transversal (52) éloigné de la rainure transversale (50) destiné à la nervure transversale (62) et un évidement longitudinal (54) réunissant la rainure transversale (50) avec l'évidement transversal (52), l'évidement longitudinal (54) étant prévu, en position de libération du bouton d'actionnement (46) pour recevoir une section correspondante du premier bras de levier de la structure de levier (60) tandis que l'évidement transversal (52), dans la même position, est prévu pour recevoir un organe d'arrêt (70) formé sur une barre transversale (72).

10. Siège pour enfant selon la revendication 9, caractérisé en ce que le premier bras de levier (66) comporte un trou borgne (90) entre la nervure transversale (62) et la barre transversale (72) formant l'organe d'arrêt (70), ce trou étant prévu pour l'immobilisation d'une section terminale de l'élément élastique (86).

11. Siège pour enfant selon les revendications 9 et 10, caractérisé en ce que l'évidement longitudinal (54) présente un second trou borgne (88) prévu pour l'immobilisation de la seconde section terminale de l'élément élastique (86).

12. Siège pour enfant selon l'une quelconque des revendications 7 à 11, caractérisé en ce que la structure de levier à deux bras (60) est agencée avec un patin-axe de basculement (82) sur la face opposée à la nervure trransversale (62).

13. Siège pour enfant selon l'une quelconque des revendications 7 à 12, caractérisé en ce que la portion centrale (30) de l'appuie-tête (22) présente sur sa face frontale (48) au moins une nervure de guidage (56, 58) qui pénètre dans une rainure longitudinale (42) pratiquée dans une face postérieure (40) du dossier (14) et contre laquelle est repoussé l'organe d'arrêt (70) du dispositif d'arrêt (24) dans la position d'arrêt normale, grâce à l'élément élastique (86).

14. Siège pour enfant selon la revendication 13, caractérisé en ce que la rainure longitudinale (42) est associée à deux rainures transversales écartées l'une de l'autre (26), à l'intérieur desquelles l'organe d'arrêt (70) est repoussé dans la position d'arrêt normale par l'élément élastique (86).

15. Siège pour enfant selon l'une des revendications 13 ou 14, caractérisé en ce que la rainure longitudinale (42) est fermée sur le dessus par un élément d'obturation amovible.

16. Siège pour enfant selon l'une quelconque des revendications précédentes, caractérisé en ce que les joues latérales (28) de l'appuie-tête (22) présente des évidements (38) en forme de crochets pour une ceinture de sécurité.
